# EUROPEAN PATENT APPLICATION

(11) **EP 4 597 881 A1**
(43) Date of publication of application: **06.08.2025**
(21) Application number: 22960870.8
(22) Date of filing: 28.09.2022
(51) Int. Cl.: H04B 10/291

(54) **OPTICAL COMMUNICATION DEVICE AND OPTICAL COMMUNICATION PATHWAY OPENING METHOD**

(71) Applicant: NIPPON TELEGRAPH AND TELEPHONE CORPORATION, Chiyoda-ku, Tokyo 100-8116 (JP)
(72) Inventor: KANEKO Shin, Musashino-shi, Tokyo 180-8585 (JP); SHIBATA Naotaka, Musashino-shi, Tokyo 180-8585 (JP); O Hiroshi, Musashino-shi, Tokyo 180-8585 (JP); KANI Junichi, Musashino-shi, Tokyo 180-8585 (JP)
(74) Representative: Brevalex
(86) International application number: PCT/JP2022/036242
(87) International publication number: WO 2024/069807

(57) **Abstract**

An optical communication device including: a first optical multiplexing and demultiplexing unit that splits and outputs a control signal and main signal light transmitted at different wavelengths from at least one newly connected subscriber device; an optical distribution unit that includes a plurality of first ports and a plurality of second ports, receives as input at least the main signal light split by the first optical multiplexing and demultiplexing unit from any first port of the plurality of first ports, and outputs the main signal light from any second port of the plurality of second ports; a detection unit that is included inside or outside the optical distribution unit and detects the main signal light; a subscriber device management control unit that recognizes a port of the optical distribution unit to which at least one newly connected subscriber device is connected on a basis of the main signal light detected by the detection unit; and an optical distribution control unit that controls connection between ports of the optical distribution unit such that main signal light transmitted from the at least one newly connected subscriber device is transferred to a subscriber device as a communication counterpart.

## Description

### Technical Field

The present invention relates to an optical communication device and an optical communication route establishing method.

### Background Art

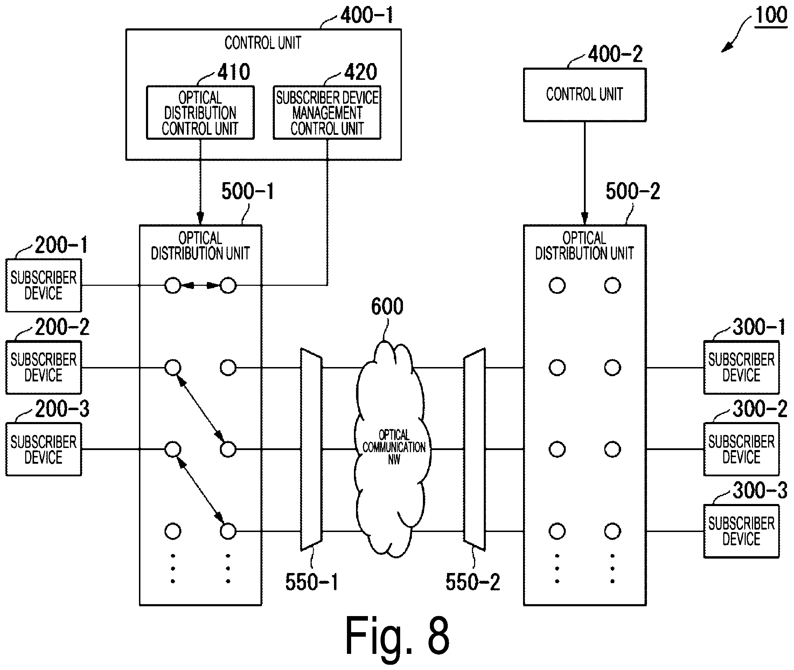

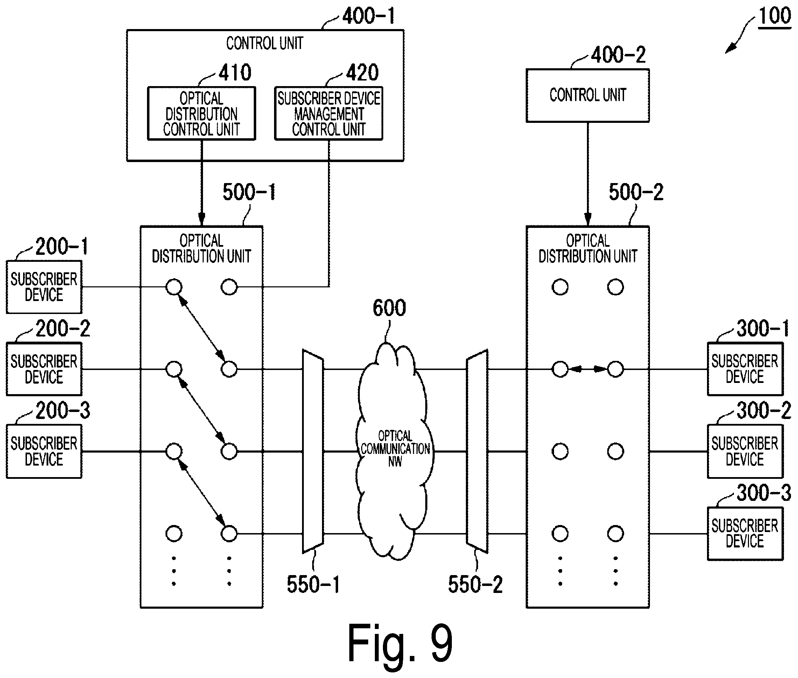

In a conventional optical communication system, it is necessary for a subscriber device to establish an optical path for connection to a subscriber device as a communication counterpart in order to perform communication. Figs. 8 and 9 are diagrams for describing a method for establishing an optical path in a conventional optical communication system 100. As illustrated in Fig. 8, the conventional optical communication system 100 includes a plurality of subscriber devices 200-1 to 200-3, a plurality of subscriber devices 300-1 to 300-3, a plurality of control units 400-1 to 400-2, a plurality of optical distribution units 500-1 to 500-2, and a plurality of wavelength multiplexing and demultiplexing units 550-1 to 550-2.

Note that the subscriber device 200-1 is not connected to the optical distribution unit 500-1, the subscriber devices 200-2 to 200-3 are connected to the optical distribution unit 500-1 via optical transmission lines, and the subscriber devices 300-1 to 300-3 are connected to the optical distribution unit 500-2 via optical transmission lines. The optical distribution unit 500-1 and the optical distribution unit 500-2 are connected via an optical communication NW 600 that includes an optical transmission line and the wavelength multiplexing and demultiplexing unit 550-1 to 550-2. The control unit 400-1 manages the subscriber devices 200 and controls operation of the optical distribution unit 500-1. The control unit 400-2 manages the subscriber devices 300 and controls operation of the optical distribution unit 500-2.

Assume that in a case where a user tries to start communication via the subscriber device 200-1, the subscriber device 200-1 is newly connected to the optical distribution unit 500-1. At the time of initial connection of the subscriber device 200-1, an optical distribution control unit 410 sets connection between ports of the optical distribution unit 500-1 in order for the subscriber device 200-1 to communicate with a subscriber device management control unit 420. It is thus possible to exchange information necessary for registration and authentication of the subscriber device 200-1 between the subscriber device 200-1 and the subscriber device management control unit 420 and to provide an instruction regarding a light emission wavelength used for transmission and reception from the subscriber device management control unit 420 to the subscriber device 200-1. A control signal called an auxiliary management and control channel (AMCC) can be used as a signal for management and control of the subscriber device. The AMCC signal includes state information indicating, for example, a transmission and reception wavelength of an optical transceiver, a transmission optical intensity, a temperature, and the like.

Once registration and authentication of the subscriber device 200-1, wavelength setting, and the like are completed, as illustrated in Fig. 9, the optical distribution control unit 410 changes settings for connection between the ports of the optical distribution unit 500-1 such that an optical signal transmitted from the subscriber device 200-1 is transferred to a subscriber device 300 as a communication counterpart (for example, subscriber device 300-1). Similarly, the control unit 400-2 changes setting for connection between the ports of the optical distribution unit 500-2 such that an optical signal transmitted from the subscriber device 200-1 is transferred to a subscriber device 300 as a communication counterpart (for example, subscriber device 300-1). It is thus possible to establish an optical path that connects the subscriber device 200-1 to the subscriber device 300-1 as illustrated in Fig. 9.

However, in the configurations of the conventional optical communication system 100 illustrated in Figs. 8 and 9, there is no control channel that transmits a control signal between the control units 400 and the subscriber devices 200 and 300 once the optical path is established. On the other hand, with the configuration of an optical communication system 150 illustrated in Fig. 10, the control units 400 can exchange control signals with the plurality of subscriber devices 200 and 300 even after the optical path is once established.

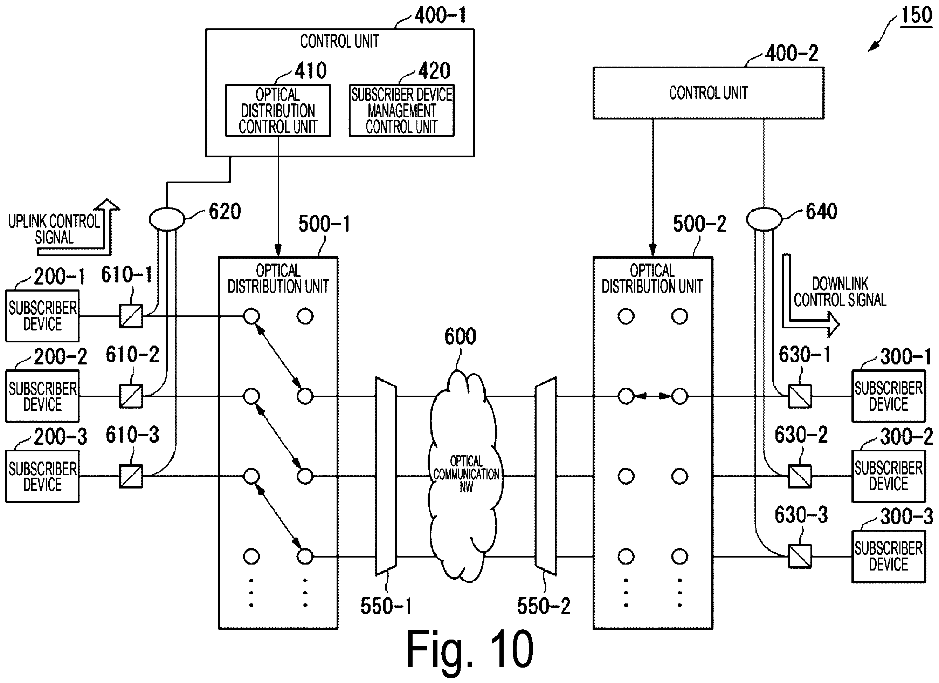

Fig. 10 is a diagram illustrating a configuration example of the conventional optical communication system 150. As illustrated in Fig. 10, the conventional optical communication system 150 includes the plurality of subscriber devices 200-1 to 200-3, the plurality of subscriber devices 300-1 to 300-3, the plurality of control units 400-1 to 400-2, the plurality of optical distribution units 500-1 to 500-2, the plurality of wavelength multiplexing and demultiplexing units 550-1 to 550-2, a plurality of first optical multiplexing and demultiplexing units 610-1 to 610-3, a second optical multiplexing and demultiplexing unit 620, a plurality of first optical multiplexing and demultiplexing units 630-1 to 630-3, and a second optical multiplexing and demultiplexing unit 640. The optical communication system 150 has a configuration in which the plurality of first optical multiplexing and demultiplexing units 610-1 to 610-3, the second optical multiplexing and demultiplexing unit 620, the plurality of first optical multiplexing and demultiplexing units 630-1 to 630-3, and the second optical multiplexing and demultiplexing unit 640 are added to the optical communication system 100 illustrated in Figs. 8 and 9.

The plurality of first optical multiplexing and demultiplexing units 610-1 to 610-3 are included between the plurality of subscriber devices 200-1 to 200-3 and the optical distribution unit 500-1. The second optical multiplexing and demultiplexing unit 620 is included between the plurality of first optical multiplexing and demultiplexing units 610-1 to 610-3 and the control unit 400-1. The plurality of first optical multiplexing and demultiplexing units 630-1 to 630-3 are included between the plurality of subscriber devices 300-1 to 300-3 and the optical distribution unit 500-2. The second optical multiplexing and demultiplexing unit 640 is included between the plurality of first optical multiplexing and demultiplexing units 630-1 to 630-3 and the control unit 400-2.

The subscriber devices 200-1 to 200-3 output uplink control signals for the control unit 400-1 at a wavelength different from that of an optical carrier that carries a main signal (hereinafter referred to as "main signal light"). The plurality of first optical multiplexing and demultiplexing units 610-1 to 610-3 transfers the uplink control signals transmitted from the subscriber devices 200-1 to 200-3 to the second optical multiplexing and demultiplexing unit 620. The second optical multiplexing and demultiplexing unit 620 multiplexes the uplink control signals transferred from the plurality of first optical multiplexing and demultiplexing units 610-1 to 610-3 and outputs the multiplexed uplink control signals to the control unit 400-1. The control unit 400-2 outputs a downlink control signal for the plurality of subscriber devices 300-1 to 300-3 at a wavelength different from that of main signal light. The second optical multiplexing and demultiplexing unit 640 splits the downlink control signal output from the control unit 400-2 and outputs the signals to the plurality of first optical multiplexing and demultiplexing units 630-1 to 630-3. The plurality of first optical multiplexing and demultiplexing units 630-1 to 630-3 wavelength-multiplexes the downlink control signals and the main signal light and outputs the multiplexed signal to the plurality of subscriber devices 300-1 to 300-3.

With the above configuration, the control units 400-1 to 400-2 exchange information necessary for registration, authentication, and optical path establishing with the subscriber devices 200 and 300 before optical path establishing via the plurality of first optical multiplexing and demultiplexing units 610-1 to 610-3 and the second optical multiplexing and demultiplexing unit 620 or the plurality of first optical multiplexing and demultiplexing units 630-1 to 630-3 and the second optical multiplexing and demultiplexing unit 640. Similarly, the control units 400-1 to 400-2 can exchange control information with the subscriber devices 200 and 300 after the optical path establishing via the plurality of first optical multiplexing and demultiplexing units 610-1 to 610-3 and the second optical multiplexing and demultiplexing unit 620 or the plurality of first optical multiplexing and demultiplexing units 630-1 to 630-3 and the second optical multiplexing and demultiplexing unit 640.

### Citation List

### Non Patent Literature

Non Patent Literature 1: Takuya Kanai, Kazuaki Honda, Yasunari Tanaka, Shin Kaneko, Kazuki Hara, Junichi Kani, Tomoaki Yoshida, "Photonic Gateway for All-Photonics Network," IEICE general conference, B-8-20, March 2021.

### Summary of Invention

### Technical Problem

In order to open an optical path to a newly connected subscriber device, an optical distribution control unit needs to set connection between ports of an optical distribution unit such that main signal light transmitted from a newly connected subscriber device is transferred to a subscriber device as a communication counterpart as soon as registration and authentication of the newly connected subscriber device, wavelength setting, and the like are completed. At this time, in order for the optical distribution control unit to appropriately change the setting of the connection between the ports of the optical distribution unit, it is necessary for a control unit to recognize which port of the optical distribution unit the newly connected subscriber device is connected to via the optical transmission line. However, in the conventional configuration illustrated in Fig. 10, since the control unit cannot recognize which port of the optical distribution unit the newly connected subscriber device is connected to via the optical transmission line, there is an issue that the optical path that is an optical route cannot be established.

In view of the above circumstances, an object of the present invention is to provide a technology that enables establishing an optical route that communicably connects a newly connected subscriber device and a subscriber device as a communication counterpart in an optical communication system that includes an optical multiplexing and demultiplexing unit between an optical distribution unit or a control unit and a subscriber device.

### Solution to Problem

An aspect of the present invention is an optical communication device including: a first optical multiplexing and demultiplexing unit that splits and outputs a control signal and main signal light transmitted at different wavelengths from at least one newly connected subscriber device; an optical distribution unit that includes a plurality of first ports and a plurality of second ports, receives as input at least the main signal light split by the first optical multiplexing and demultiplexing unit from any first port of the plurality of first ports, and outputs the main signal light from any second port of the plurality of second ports; a detection unit that is included inside or outside the optical distribution unit and detects the main signal light; a subscriber device management control unit that recognizes a port of the optical distribution unit to which at least one newly connected subscriber device is connected on a basis of the main signal light detected by the detection unit; and an optical distribution control unit that controls connection between ports of the optical distribution unit such that main signal light transmitted from the at least one newly connected subscriber device is transferred to a subscriber device as a communication counterpart.

An aspect of the present invention is an optical communication route establishing method including: splitting and outputting a control signal and main signal light transmitted at different wavelengths from at least one newly connected subscriber device; by an optical distribution unit that includes a plurality of first ports and a plurality of second ports, receiving as input at least the split main signal light from any first port of the plurality of first ports, and outputting the main signal light from any second port of the plurality of second ports; detecting the main signal light inside or outside the optical distribution unit; recognizing a port of the optical distribution unit to which at least one newly connected subscriber device is connected on a basis of the detected main signal light; and controlling connection between ports of the optical distribution unit such that main signal light transmitted from the at least one newly connected subscriber device is transferred to a subscriber device as a communication counterpart.

### Advantageous Effects of Invention

According to the present invention, in an optical communication system that includes an optical multiplexing and demultiplexing unit between an optical distribution unit or a control unit and a subscriber device, it is possible to establish an optical route that communicably connects a newly connected subscriber device and a subscriber device as a communication counterpart.

### Brief Description of Drawings

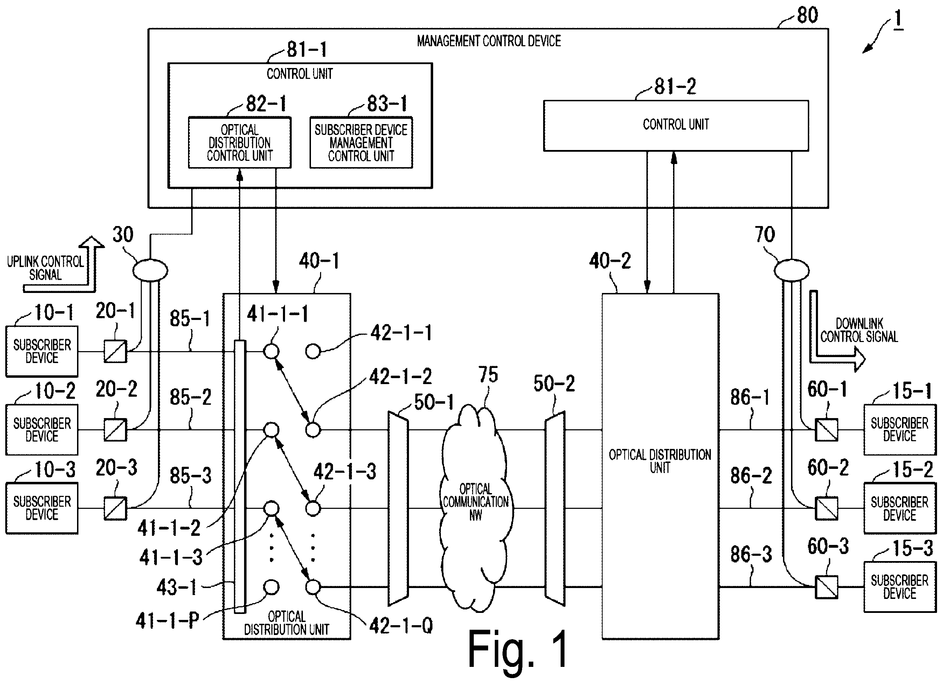

[Fig. 1] A diagram illustrating a configuration example of an optical communication system according to a first embodiment.

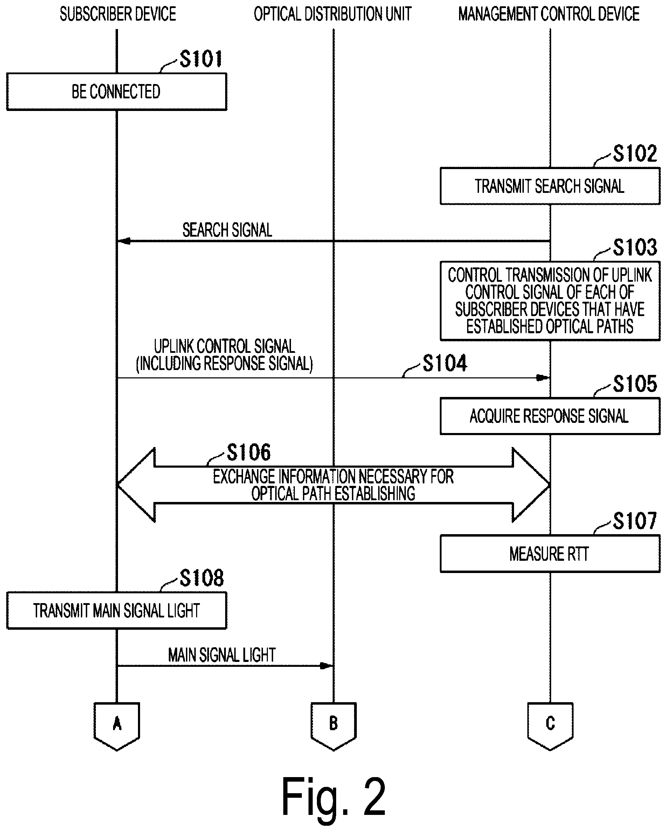

[Fig. 2] A sequence diagram illustrating a flow of optical path establishing processing of the optical communication system according to the first embodiment.

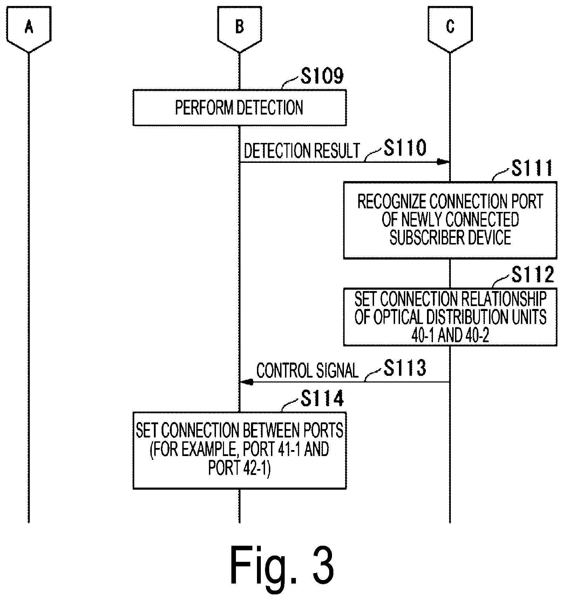

[Fig. 3] A sequence diagram illustrating a flow of optical path establishing processing of the optical communication system according to the first embodiment.

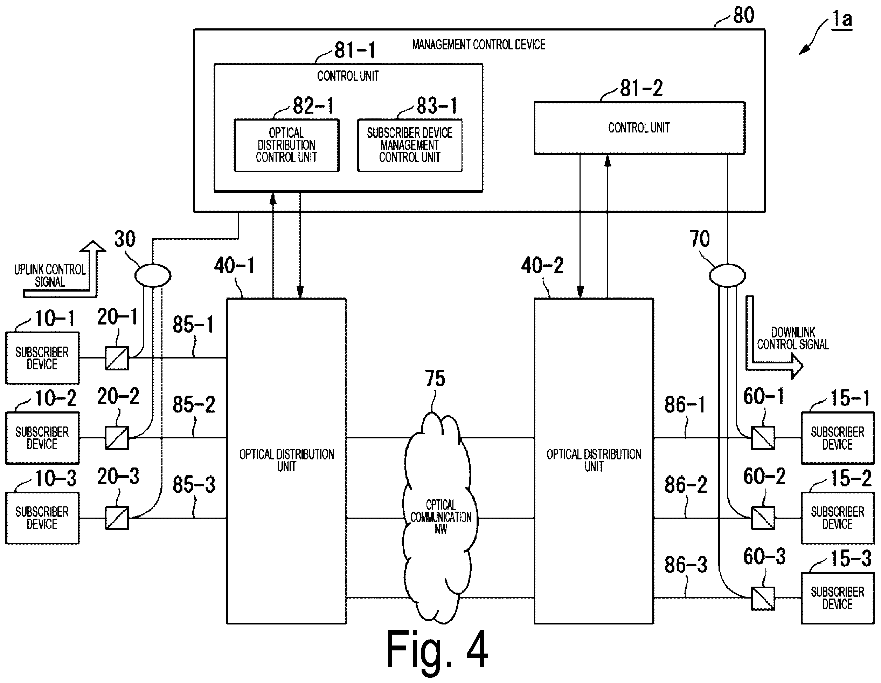

[Fig. 4] A diagram illustrating a configuration example of an optical communication system according to Modification 1 of the first embodiment.

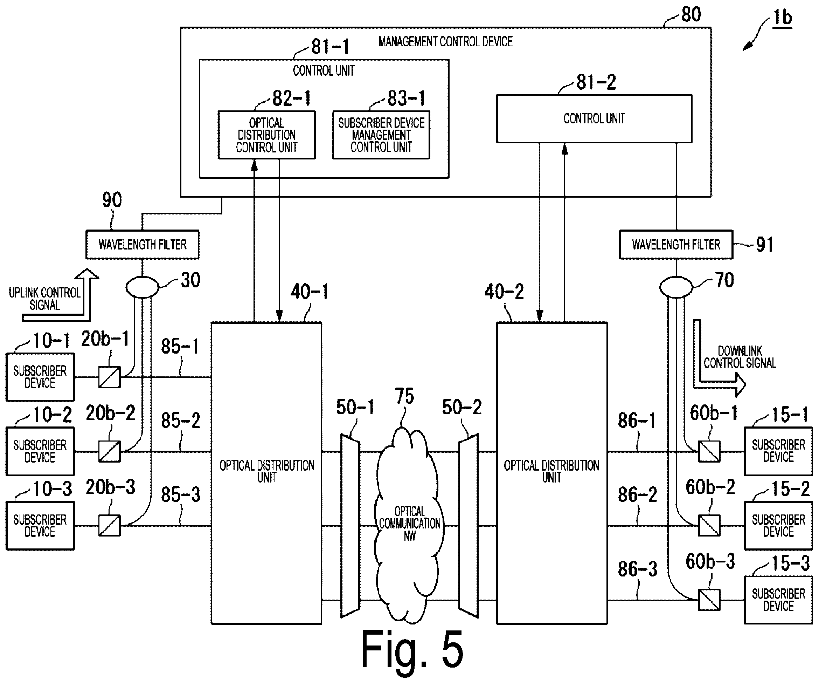

[Fig. 5] A diagram illustrating a configuration example of an optical communication system according to Modification 2 of the first embodiment.

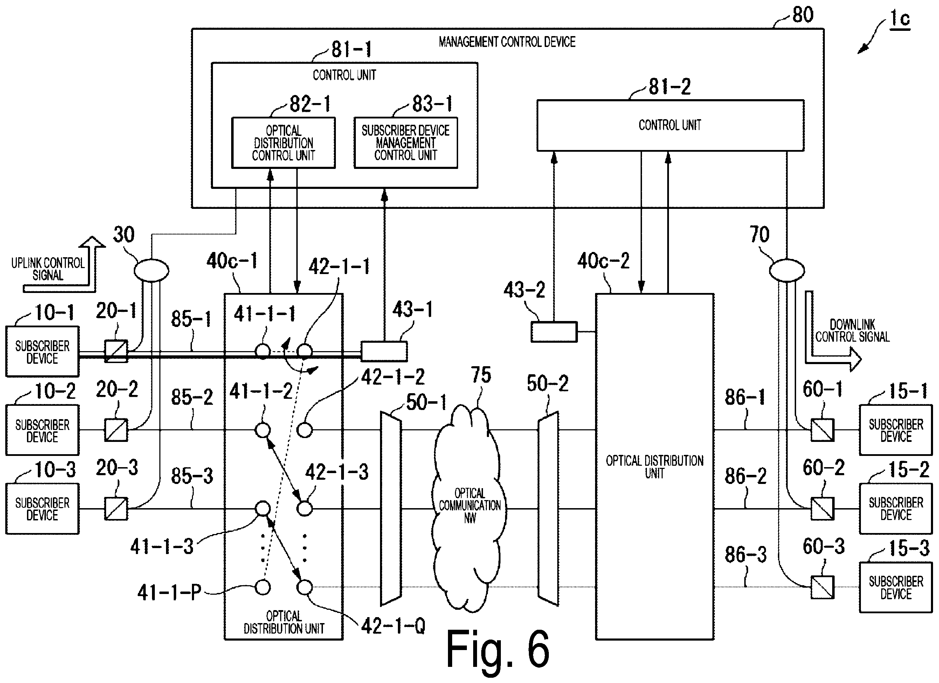

[Fig. 6] A diagram illustrating a configuration example of an optical communication system according to a second embodiment.

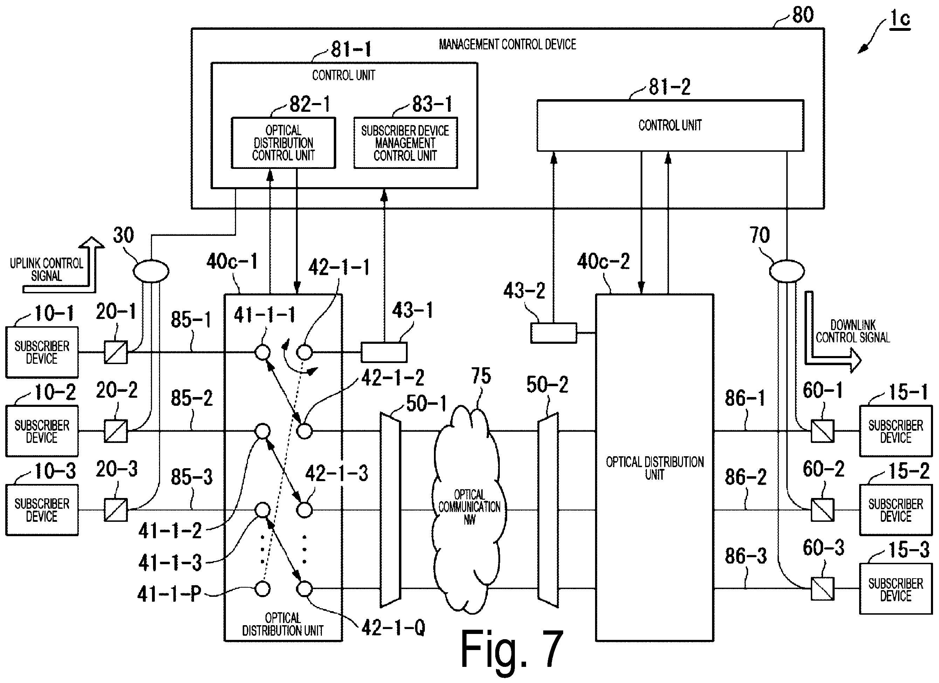

[Fig. 7] A diagram illustrating a configuration example of the optical communication system according to the second embodiment after optical path establishing.
[Fig. 8] A diagram for describing a method for establishing an optical path in a conventional optical communication system.
[Fig. 9] A diagram for describing the method for establishing an optical path in the conventional optical communication system.
[Fig. 10] A diagram illustrating a configuration example of a conventional optical communication system.

### Description of Embodiments

Hereinafter, embodiments of the present invention will be described with reference to the drawings.

### (First Embodiment)

Fig. 1 is a diagram illustrating a configuration example of an optical communication system 1 according to a first embodiment. The optical communication system 1 includes a plurality of subscriber devices 10 (for example, subscriber devices 10-1 to 10-3), a plurality of subscriber devices 15 (for example, subscriber devices 15-1 to 15-3), a plurality of first optical multiplexing and demultiplexing units 20 (for example, first optical multiplexing and demultiplexing units 20-1 to 20-3), a second optical multiplexing and demultiplexing unit 30, a plurality of optical distribution units 40 (for example, optical distribution units 40-1 to 40-2), a plurality of wavelength multiplexing and demultiplexing units 50 (for example, wavelength multiplexing and demultiplexing units 50-1 to 50-2), a plurality of first optical multiplexing and demultiplexing units 60 (for example, first optical multiplexing and demultiplexing units 60-1 to 60-3), a second optical multiplexing and demultiplexing unit 70, and a management control device 80. In the first embodiment, a case will be described as an example where the subscriber devices 10 transmit optical signals and the subscriber devices 15 receive the optical signals transmitted from the subscriber devices 10.

In the following description, a direction from the subscriber devices 10 and 15 toward the management control device 80 is assumed to be an uplink direction, and a direction from the management control device 80 toward the subscriber devices 10 and 15 is assumed to be a downlink direction. The numbers of the subscriber devices 10, the subscriber devices 15, the first optical multiplexing and demultiplexing units 20 and 60, the second optical multiplexing and demultiplexing units 30 and 70, the optical distribution units 40, and the wavelength multiplexing and demultiplexing units 50 included in the optical communication system 1 are not limited to the numbers illustrated in Fig. 1.

Connection is made between the subscriber devices 10 and the first optical multiplexing and demultiplexing units 20, between the first optical multiplexing and demultiplexing units 20 and the second optical multiplexing and demultiplexing unit 30, between the second optical multiplexing and demultiplexing units 30 and 70 and the management control device 80, between the first optical multiplexing and demultiplexing units 20 and the optical distribution unit 40-1, between the optical distribution unit 40-1 and the wavelength multiplexing and demultiplexing unit 50-1, between the wavelength multiplexing and demultiplexing unit 50-1 and the wavelength multiplexing and demultiplexing unit 50-2, between the wavelength multiplexing and demultiplexing unit 50-2 and the optical distribution unit 40-2, between the optical distribution unit 40-2 and the first optical multiplexing and demultiplexing units 60, between the first optical multiplexing and demultiplexing units 60 and the subscriber devices 15, and between the first optical multiplexing and demultiplexing units 60 and the second optical multiplexing and demultiplexing unit 70 using optical transmission lines. The optical transmission lines are, for example, optical fibers. An optical communication NW 75 is configured between the wavelength multiplexing and demultiplexing unit 50-1 and the wavelength multiplexing and demultiplexing unit 50-2.

Each of the subscriber devices 10 includes an optical transceiver. The optical transceiver is, for example, a coherent transceiver. Each of the subscriber devices 10 transmits and receives an optical signal such as a main signal and a control signal by the optical transceiver. The subscriber device 10 before optical path establishing transmits light having a wavelength that reaches the optical distribution unit 40-1 at any timing before, during, or after exchange of information necessary for registration, authentication, and optical path establishing with the management control device 80.

The information necessary for optical path establishing is, for example, information of a wavelength used for transmission and reception, information of the subscriber device 15 as a communication target, and the like. Hereinafter, in a case where there is no particular distinction of any timing before, during, or after exchange of the information necessary for registration, authentication, and optical path establishing with the management control device 80, the timing is referred to as main signal light transmission timing. The light having a wavelength that reaches the optical distribution unit 40-1 is light within a range of a wavelength transmitted from the port on the subscriber device 10 side to the port on the optical distribution unit 40-1 side among input/output ports of the first optical multiplexing and demultiplexing unit 20.

Each of the subscriber devices 10 transmits light having a wavelength that reaches the optical distribution unit 40-1 at the main signal light transmission timing. In a case where each of the subscriber devices 10 transmits light having a wavelength that reaches the optical distribution unit 40 at the main signal light transmission timing, each of the subscriber devices 10 itself may determine the transmission timing, or may perform transmission after receiving a transmission instruction by a downlink control signal from the management control device 80.

In a case where each of the subscriber devices 10 itself determines the transmission timing, there is a possibility that two or more subscriber devices 10 simultaneously transmit light having the same wavelength. On the other hand, in a case where transmission is performed after a transmission command is received from the management control device 80 by a downlink control signal, it is possible to avoid the possibility of simultaneously transmitting light having the same wavelength if the management control device 80 sends the transmission command to each of the subscriber devices 10.

Each of the subscriber devices 10 outputs an uplink control signal for the management control device 80 as an optical signal having a wavelength different from that of the main signal light. The wavelength of the uplink control signal transmitted by each of the subscriber devices 10 is within a range of a wavelength transmitted from a port on the subscriber device 10 side to a port on the second optical multiplexing and demultiplexing unit 30 side among input/output ports of the first optical multiplexing and demultiplexing unit 20. Note that the wavelengths of uplink control signals transmitted by the respective subscriber devices 10 may all be the same. Each of the subscriber devices 10 is, for example, an optical network unit (ONU) installed in a subscriber's home. In the following description, assume that the subscriber device 10-1 is a subscriber device newly connected to the optical distribution unit 40-1.

Each of the subscriber devices 15 performs communication with the subscriber device 10. Each of the subscriber devices 15 includes an optical transceiver. Each of the subscriber devices 15 transmits and receives an optical signal such as a main signal and a control signal by the optical transceiver. Each of the subscriber devices 15 also performs processing similar to that of the subscriber devices 10 as processing before optical path establishing. Each of the subscriber devices 15 receives a downlink control signal transmitted from the management control device 80 and main signal light transmitted through an optical transmission line 86. Each of the subscriber devices 15 is, for example, installed in a subscriber's house.

Each of the first optical multiplexing and demultiplexing units 20 is included between the subscriber device 10 and the optical distribution unit 40-1. The first optical multiplexing and demultiplexing units 20 split and output uplink control signals and main signal light transmitted from the respective subscriber devices 10 at different wavelengths. In the following description, the splitting performed by the first optical multiplexing and demultiplexing units 20 includes a case of separating an uplink control signal and main signal light and a case of splitting an uplink control signal and main signal light at a predetermined ratio. In a case of separating an uplink control signal and main signal light, each of the first optical multiplexing and demultiplexing units 20 separates an uplink control signal and main signal light on the basis of the wavelength, outputs the separated uplink control signal to the second optical multiplexing and demultiplexing unit 30, and outputs the separated main signal light to the optical distribution unit 40-1. In a case of splitting an uplink control signal and main signal light at a predetermined ratio, each of the first optical multiplexing and demultiplexing units 20 splits an uplink control signal and main signal light together at a predetermined ratio, and outputs the signals to the second optical multiplexing and demultiplexing unit 30 and the optical distribution unit 40-1. As the first optical multiplexing and demultiplexing units 20 in the first embodiment, optical multiplexers/demultiplexers having wavelength selectivity (for example, wavelength filters) are used.

The second optical multiplexing and demultiplexing unit 30 is included between the first optical multiplexing and demultiplexing units 20 and a control unit 81-1. The second optical multiplexing and demultiplexing unit 30 multiplexes uplink control signals transferred from the respective first optical multiplexing and demultiplexing units 20 and outputs the multiplexed uplink control signals to the control unit 81-1. The second optical multiplexing and demultiplexing unit 30 is, for example, an optical coupler.

The optical distribution unit 40-1 includes P (P is an integer of 2 or more) ports 41-1, Q (Q is an integer of 2 or more) ports 42-1, and a light detection unit 43-1. Since the optical distribution unit 40-2 has a configuration similar to that of the optical distribution unit 40-1, the configuration of the optical distribution unit 40-1 will be described as an example. An optical signal input to a certain port of the optical distribution unit 40 is output from another port. For example, an optical signal input to the port 41-1 of the optical distribution unit 40 is output from the port 42-1. The optical distribution unit 40 in the first embodiment is a fiber cross connect (FXC) that outputs light input from each port to a port for which a connection relationship is set as a connection port for the port regardless of a wavelength. As the optical distribution unit 40 in the first embodiment, for example, a spatial optical switch using micro electro mechanical systems (MEMS) or a piezo actuator is used. The port 41-1 is an aspect of a first port, and the port 42-1 is an aspect of a second port.

The light detection unit 43-1 detects an optical signal input to the port 41-1. In a case of detecting the optical signal, the light detection unit 43-1 notifies the management control device 80 of a detection result including the port that has detected the optical signal. The notification from the light detection unit 43-1 to the management control device 80 may be performed via an electric line that connects the management control device 80 and the optical distribution unit 40-1. By the notification transmitted from the light detection unit 43-1, the management control device 80 can recognize an input of light to a port to which the subscriber device 10 is newly connected.

The wavelength multiplexing and demultiplexing unit 50 multiplexes or demultiplexes the input optical signal according to the wavelength. For example, the wavelength multiplexing and demultiplexing unit 50-1 generates a multiplexed signal by multiplexing optical signals having a plurality of wavelengths output from the optical distribution unit 40-1. The wavelength multiplexing and demultiplexing unit 50-1 outputs the generated multiplexed signal to the optical transmission line. For example, the wavelength multiplexing and demultiplexing unit 50-2 demultiplexes and outputs the multiplexed signal input via the optical transmission line for each of the wavelengths. The wavelength multiplexing and demultiplexing unit 50 is, for example, an arrayed waveguide grating (AWG), a wavelength selective switch (WSS), or the like.

Each of the first optical multiplexing and demultiplexing units 60 is included between the subscriber device 15 and the optical distribution unit 40-2. Each of the first optical multiplexing and demultiplexing units 60 wavelength-multiplexes main signal light transmitted through the optical transmission line and a downlink control signal output from the second optical multiplexing and demultiplexing unit 70, and outputs the result to the subscriber device 15. As the first optical multiplexing and demultiplexing units 60 in the first embodiment, optical multiplexers/demultiplexers having wavelength selectivity (for example, wavelength filters) are used.

The second optical multiplexing and demultiplexing unit 70 is included between the first optical multiplexing and demultiplexing units 60 and a control unit 81-2. The second optical multiplexing and demultiplexing unit 70 splits a downlink control signal output from the control unit 81-2 and outputs the signals to the respective first optical multiplexing and demultiplexing units 60. The second optical multiplexing and demultiplexing unit 70 is, for example, an optical coupler.

The management control device 80 controls at least the subscriber devices 10 and 15 and the optical distribution units 40. Here, the control of the subscriber devices 10 and 15 is, for example, control of the transmission timing of a control signal, allocation of light emission wavelengths to the subscriber devices 10 and 15, a light stop instruction, a wavelength change instruction, and the like. The control of the optical distribution units 40 is, for example, connection switching between the ports of the optical distribution units 40. The management control device 80 includes a plurality of control units 81(for example, control units 81-1 to 81-2). Each of the control units 81 controls the optical distribution unit 40 and the subscriber devices 10 or 15 accommodated in the optical distribution unit 40. For example, the control unit 81-1 controls the optical distribution unit 40-1 and the subscriber devices 10 accommodated in the optical distribution unit 40-1. For example, the control unit 81-2 controls the optical distribution unit 40-2 and the subscriber devices 15 accommodated in the optical distribution unit 40-2.

The control unit 81-1 includes an optical distribution control unit 82-1 and a subscriber device management control unit 83-1. The control unit 81-2 has a configuration similar to that of the control unit 81-1. The control unit 81-1 and the control unit 81-2 perform similar processing except that the control target is different, and thus the optical distribution control unit 82-1 and the subscriber device management control unit 83-1 will be described as an example.

The optical distribution control unit 82-1 sets and switches connection between the ports of the optical distribution unit 40 and sets an optical path.

In a case where the subscriber device 10 is newly connected to the optical distribution unit 40, the subscriber device management control unit 83-1 transmits a search signal for requesting return of a response signal to the subscriber device 10 newly connected to the optical distribution unit 40. The subscriber device management control unit 83-1 may periodically transmit a search signal, or may transmit a search signal only in a case where connection of the subscriber device 10 that requests optical path establishing is detected. The subscriber device management control unit 83-1 measures a round trip time (RTT) between the subscriber device 10 and the subscriber device management control unit 83-1 through exchange of a search signal, a response signal, and a subsequent signal with the subscriber device 10.

After photoelectrically converting an uplink control signal transmitted from the subscriber device 10, the subscriber device management control unit 83-1 recognizes the subscriber device 10 that is the transmission source of the received uplink control signal using an identifier included in the uplink control signal. Examples of the identifier include an ID given from the subscriber device management control unit 83-1 to the subscriber device 10, a media access control (MAC) address of the subscriber device 10, and the like.

In a case where uplink control signals are simultaneously transmitted from a plurality of subscriber devices 10, the uplink control signals may collide with each other. Therefore, in order to implement exchange of control signals between the subscriber device management control unit 83-1 and a plurality of subscriber devices 10, for example, a passive optical network (PON) method can be applied. Each of the subscriber devices 10 outputs an uplink control signal including a control signal only in a time zone permitted by the subscriber device management control unit 83-1, and stops outputting an uplink control signal in the other time zones. That is, the uplink control signal is burst signal light.

The subscriber device management control unit 83-1 is aware of the RTT between each of the subscriber devices 10 and the subscriber device management control unit 83-1. Therefore, the subscriber device management control unit 83-1, with reference to RTT values, gives permission to transmit an uplink control signal to each of the subscriber devices 10 such that an uplink control signal from the subscriber device 10, which is burst signal light, does not reach the subscriber device management control unit 83-1 in the same time zone as uplink control signals from the other subscriber devices 10.

Note that the subscriber device management control unit 83-1 gives a transmission permission to the subscriber devices 10 that have established optical paths with reference to the RTT values between the respective subscriber device 10 and the subscriber device management control unit 83-1 such that uplink control signals from the subscriber devices 10 that have established optical paths do not reach the subscriber device management control unit 83-1 during a period in which an uplink control signal including a response signal returned by the subscriber device 10 before optical path establishing (for example, subscriber device 10-1) in response to a search signal from the subscriber device management control unit 83-1 can reach the subscriber device management control unit 83-1.

With the above configuration, the subscriber device management control unit 83-1 exchanges information necessary for registration, authentication, and optical path establishing with the subscriber device 10 before optical path establishing via the first optical multiplexing and demultiplexing units 20 and the second optical multiplexing and demultiplexing unit 30. Furthermore, the subscriber device management control unit 83-1 exchanges control information with the subscriber devices 10 after optical path establishing via the first optical multiplexing and demultiplexing units 20 and the second optical multiplexing and demultiplexing unit 30.

Furthermore, in a case where the subscriber device 10 is newly connected to the optical distribution unit 40, the subscriber device management control unit 83-1 identifies which port of the optical distribution unit 40 the subscriber device 10 newly connected to the optical distribution unit 40 is connected to on the basis of a detection result transmitted from the optical distribution unit 40. The subscriber device management control unit 83-1 performs processing of optical path establishing by switching the connection relationship of the optical distribution unit 40 such that the identified port and the port to which the subscriber device 15 as a communication target is connected can communicate.

In the process of exchanging information necessary for registration, authentication, and optical path establishing with the newly connected subscriber device 10, the subscriber device management control unit 83-1 recognizes that the port of the optical distribution unit 40-1 in which the optical input is newly detected is the port to which the newly connected subscriber device 10 is connected, on the basis of the detection result obtained from the optical distribution unit 40 before, after, or within a predetermined time before or after a reference time using the time point at which the connection of the new subscriber device 10 is recognized as a reference.

The control unit 81-2 transmits downlink control signals to the subscriber devices 15. The wavelength of the downlink control signals transmitted by the control unit 81-2 is within a range of a wavelength transmitted from a port on the second optical multiplexing and demultiplexing unit 70 side to a port on the subscriber device 15 side among input/output ports of the first optical multiplexing and demultiplexing unit 60. The downlink control signals are signal light obtained by time-multiplexing downlink control signals addressed to the respective subscriber devices 15. After photoelectrically converting the downlink control signals, each of the subscriber devices 15 selectively receives a downlink control signal addressed to the own device in the time-multiplexed downlink control signals using identifiers included in the downlink control signals. Examples of the identifiers include IDs given from the subscriber device management control unit 83-2 included in the control unit 81-2 to the subscriber devices 15, MAC addresses of the subscriber devices 15, and the like. The functions of the control units 81 may be implemented by one or more processors executing a program.

Figs. 2 and 3 are sequence diagrams illustrating a flow of optical path establishing processing of the optical communication system 1 according to the first embodiment. Note that, in Figs. 2 and 3, a description will be given assuming that the main signal light transmission timing is any timing within a period in which information necessary for registration, authentication, and optical path establishing is exchanged between the subscriber device 10 and the management control device 80.

Assuming that the user connects the subscriber device 10-1 to the optical distribution unit 40-1 via an optical transmission line 85-1, the subscriber device 10 is thus connected to the optical distribution unit 40-1 via the optical transmission line 85-1 (step S101). The subscriber device management control unit 83-1 included in the control unit 81-1 transmits a search signal periodically or in response to detection of the connection of the subscriber device 10 (step S102).

After transmitting the search signal, the subscriber device management control unit 83-1 controls the transmission timings of uplink control signals of the subscriber devices 10 that have established optical paths (step S103). Specifically, the subscriber device management control unit 83-1 gives a transmission permission to each of the subscriber devices 10 that have established optical paths with reference to the values of the RTTs of the subscriber devices 10 that have established optical paths such that transmission of uplink control signals from other subscriber devices 10 does not reach the subscriber device management control unit 83-1 during a period in which an uplink control signal including a response signal returned by the subscriber device 10-1 in response to the search signal can reach the subscriber device management control unit 83-1. As a result, it is possible to avoid a situation in which the uplink control signals from other subscriber devices 10 reach the subscriber device management control unit 83-1 when the uplink control signal including the response signal from the subscriber device 10-1 is received by the subscriber device management control unit 83-1, and the uplink control signal cannot be received.

The search signal transmitted from the subscriber device management control unit 83-1 is input to the second optical multiplexing and demultiplexing unit 30. The second optical multiplexing and demultiplexing unit 30 splits and outputs the input search signal. The search signal split by the second optical multiplexing and demultiplexing unit 30 is input to each of the first optical multiplexing and demultiplexing units 20. Each of the first optical multiplexing and demultiplexing units 20 outputs the input search signal to the connected subscriber device 10 via the optical transmission line 85. As a result, each of the subscriber devices 10 receives the search signal transmitted from the subscriber device management control unit 83-1.

The subscriber device 10-1 generates an uplink control signal including a response signal in response to the reception of the search signal transmitted from the subscriber device management control unit 83-1. The subscriber device 10-1 transmits the generated uplink control signal to the optical transmission line 85-1 (step S104). The uplink control signal transmitted from the subscriber device 10-1 is input to the first optical multiplexing and demultiplexing unit 20-1 via the optical transmission line 85-1.

The first optical multiplexing and demultiplexing unit 20-1 outputs the input uplink control signal to the second optical multiplexing and demultiplexing unit 30. Since the wavelength of the uplink control signal transmitted by the subscriber device 10 is within a range of a wavelength transmitted from a port on the subscriber device 10 side to a port on the second optical multiplexing and demultiplexing unit 30 side among input/output ports of the first optical multiplexing and demultiplexing unit 20, the uplink control signal input to the first optical multiplexing and demultiplexing unit 20-1 is output to the second optical multiplexing and demultiplexing unit 30. Note that in a case where the wavelength of the uplink control signal transmitted by the subscriber device 10 is not within a range of a wavelength transmitted from a port on the subscriber device 10 side to a port on the optical distribution unit 40-1 side among input/output ports of the first optical multiplexing and demultiplexing unit 20, the uplink control signal input to the first optical multiplexing and demultiplexing unit 20-1 is not output to the optical distribution unit 40-1.

The second optical multiplexing and demultiplexing unit 30 multiplexes uplink control signals output from the respective first optical multiplexing and demultiplexing units 20 and outputs the multiplexed uplink control signals to the control unit 81-1. As a result, the uplink control signal transmitted from the subscriber device 10-1 is transferred to the control unit 81-1.

The subscriber device management control unit 83-1 included in the control unit 81-1 acquires the response signal included in the uplink control signal transmitted from the subscriber device 10-1 (step S105). Thereafter, the subscriber device management control unit 83-1 exchanges information necessary for optical path establishing with the subscriber device 10-1 (step S106). The subscriber device management control unit 83-1 measures the RTT between the subscriber device management control unit 83-1 and the subscriber device 10-1 while exchanging the information necessary for optical path establishing (step S107). The subscriber device management control unit 83-1 stores the measured value of the RTT in association with the identifier of the subscriber device 10-1.

The subscriber device 10 transmits main signal light having a wavelength that reaches the optical distribution unit 40-1 to the optical transmission line 85-1 at any timing in a period in which the information necessary for registration, authentication, and optical path establishing is exchanged with the management control device 80 (step S108). The main signal light transmitted from the subscriber device 10 is input to the first optical multiplexing and demultiplexing unit 20-1 via the optical transmission line 85-1.

The first optical multiplexing and demultiplexing unit 20-1 outputs the input main signal light to the optical distribution unit 40-1. Since the wavelength of the main signal light transmitted by the subscriber device 10 is within a range of a wavelength transmitted from a port on the subscriber device 10 side to a port on the optical distribution unit 40-1 side among input/output ports of the first optical multiplexing and demultiplexing unit 20, the main signal light input to the first optical multiplexing and demultiplexing unit 20-1 is output to the optical distribution unit 40-1. The light detection unit 43 of the optical distribution unit 40-1 detects the main signal light output from the first optical multiplexing and demultiplexing unit 20-1 (step S109). For example, the light detection unit 43 detects the main signal light output from the first optical multiplexing and demultiplexing unit 20-1 at a port 41-1-1. The light detection unit 43 transmits a detection result indicating that light is detected in the port 41-1 to the control unit 81-1 (step S110).

The subscriber device management control unit 83-1 included in the control unit 81-1 acquires the detection result transmitted from the light detection unit 43. The subscriber device management control unit 83-1 recognizes a port to which the subscriber device 10-1 newly connected to the optical distribution unit 40-1 is connected on the basis of the acquired detection result (step S111). Specifically, in a case where the detection result is acquired before, after, or within a predetermined time before or after the reference time, the subscriber device management control unit 83-1 recognizes that the subscriber device 10-1 newly connected to the optical distribution unit 40-1 is connected to the port indicated by port information included in the detection result (for example, port 41-1-1).

On the other hand, in a case where the detection result is not acquired before, after, or within a predetermined time before or after the reference time, the subscriber device management control unit 83-1 recognizes that the subscriber device 10-1 newly connected to the optical distribution unit 40-1 is not connected to the port indicated by port information included in the detection result (for example, port 41-1-1).

The optical distribution control units 82-1 and 82-2 set connection relationships between ports of the optical distribution units 40-1 and 40-2 on the basis of the recognized port and information of the subscriber device 15 with which the subscriber device 10-1 performs communication (for example, subscriber device 15-1) (step S112). Specifically, the optical distribution control unit 82-1 sets a connection relationship of the optical distribution unit 40-1 such that the port 41-1-1 connected to the subscriber device 10-1 is connected to a port 42-1-2 connected to the optical distribution unit 40-2 connected to the subscriber device 15-1. The optical distribution control unit 82-1 generates a control signal for connecting the port 41-1-1 and the port 42-1-2. The optical distribution control unit 82-1 transmits the generated control signal to the optical distribution unit 40-1 (step S113).

Similarly, the optical distribution control unit included in the control unit 81-2 sets a connection relationship of the optical distribution unit 40-2 such that the port connected to the subscriber device 15-1 is connected to the port connected to the optical distribution unit 40-1 connected to the subscriber device 10-1. The optical distribution control unit included in the control unit 81-2 generates a control signal for connecting the port connected to the subscriber device 15-1 and the port connected to the optical distribution unit 40-1 connected to the subscriber device 10-1. The optical distribution control unit included in the control unit 81-2 transmits the generated control signal to the optical distribution unit 40-2.

The optical distribution units 40-1 and 40-2 set connection relationships between the ports on the basis of the control signal transmitted from the management control device 80 (step S114). As a result, an optical path is established between the subscriber device 10-1 and the subscriber device 15-1. As a result, communication is enabled between the subscriber device 10-1 and the subscriber device 15-1.

According to the optical communication system 1 configured as described above, the control unit 81 can recognize which port of the optical distribution unit 40 the newly connected subscriber device 10 is connected to via the optical transmission line. As a result, the optical distribution control units 82-1 and 82-2 set connection between the ports of the optical distribution units 40-1 and 40-2 such that main signal light transmitted from the newly connected subscriber device 10 is transferred to the subscriber device 15 as a communication counterpart. As a result, in an optical communication system that includes an optical multiplexing and demultiplexing unit between an optical distribution unit or a control unit and a subscriber device, it is possible to establish an optical route that communicably connects a newly connected subscriber device and a subscriber device as a communication counterpart.

### (Modification 1)

In the configuration illustrated in Fig. 1, main signal light transmitted from the subscriber device 10 to the subscriber device 15 and main signal light transmitted from the subscriber device 15 to the subscriber device 10 flow through the core wire of the same optical transmission line. On the other hand, there may be a section in which the main signal light transmitted from the subscriber device 10 to the subscriber device 15 and the main signal light transmitted from the subscriber device 15 to the subscriber device 10 flow through the core wires of different optical transmission lines.

Fig. 4 is a diagram illustrating a configuration example of an optical communication system 1a according to Modification 1 of the first embodiment. The optical communication system 1a includes the plurality of subscriber devices 10 (for example, subscriber devices 10-1 to 10-3), the plurality of subscriber devices 15 (for example, subscriber devices 15-1 to 15-3), the plurality of first optical multiplexing and demultiplexing units 20 (for example, first optical multiplexing and demultiplexing units 20-1 to 20-3), the second optical multiplexing and demultiplexing unit 30, the plurality of optical distribution units 40 (for example, optical distribution units 40-1 to 40-2), the plurality of first optical multiplexing and demultiplexing units 60 (for example, first optical multiplexing and demultiplexing units 60-1 to 60-3), the second optical multiplexing and demultiplexing unit 70, and the management control device 80. The optical communication system 1a is different from the optical communication system 1 in that the wavelength multiplexing and demultiplexing units 50 are not included. Hereinafter, differences from the optical communication system 1 will be described.

In the case of the configuration illustrated in Fig. 4, each of the optical distribution units 40 includes a function capable of setting a transmission route for each wavelength. For example, WSSs can be used as the optical distribution units 40. As a result, the wavelength multiplexing and demultiplexing units 50 can be made unnecessary.

In a case where there is a section in which signal light in different directions flows through the core wire of the same optical transmission line, the subscriber device management control unit 83-1 sets the wavelengths of the signal light in the different directions to wavelengths different from each other or gives transmission permission to the signal light in the different directions at different timings in order to prevent deterioration of the reception characteristics of the signal light in the opposite directions due to reflection in the optical transmission line. In a case where there is no section in which signal light in different directions flows through the core wire of the same optical transmission line, the wavelengths of signal light in different directions can be set to the same wavelength.

### (Modification 2)

The optical communication system 1 may be configured to use not optical multiplexers/demultiplexers having wavelength selectivity but optical multiplexers/demultiplexers having no wavelength selectivity as the first optical multiplexing and demultiplexing units 20 and 60. Fig. 5 is a diagram illustrating a configuration example of an optical communication system 1b according to Modification 2 of the first embodiment. The optical communication system 1b includes the plurality of subscriber devices 10 (for example, subscriber devices 10-1 to 10-3), the plurality of subscriber devices 15 (for example, subscriber devices 15-1 to 15-3), a plurality of first optical multiplexing and demultiplexing units 20b (for example, first optical multiplexing and demultiplexing units 20b-1 to 20b-3), the second optical multiplexing and demultiplexing unit 30, the plurality of optical distribution units 40 (for example, optical distribution units 40-1 to 40-2), the plurality of wavelength multiplexing and demultiplexing units 50 (for example, wavelength multiplexing and demultiplexing units 50-1 to 50-2), a plurality of first optical multiplexing and demultiplexing units 60b (for example, first optical multiplexing and demultiplexing units 60b-1 to 60b-3), the second optical multiplexing and demultiplexing unit 70, the management control device 80, a wavelength filter 90, and a wavelength filter 91.

The optical communication system 1b is different from the optical communication system 1 in that the optical communication system 1b includes first optical multiplexing and demultiplexing units 20b and 60b instead of the first optical multiplexing and demultiplexing units 20 and 60, and wavelength filters 90 and 91 are newly included. Hereinafter, differences from the optical communication system 1 will be described.

Each of the first optical multiplexing and demultiplexing units 20b is included between the subscriber device 10 and the optical distribution unit 40-1. The first optical multiplexing and demultiplexing units 20b split and output uplink control signals and main signal light transmitted from the respective subscriber devices 10 at different wavelengths. As the first optical multiplexing and demultiplexing units 20b, optical multiplexers/demultiplexers having no wavelength selectivity (for example, optical couplers) are used. Therefore, the first optical multiplexing and demultiplexing units 20b split uplink control signals and main signal light transmitted from the respective subscriber devices 10 at a predetermined ratio and output the split uplink control signals and main signal light to the second optical multiplexing and demultiplexing unit 30 and the optical distribution unit 40-1.

Each of the first optical multiplexing and demultiplexing units 60b is included between the subscriber device 15 and the optical distribution unit 40-2. Each of the first optical multiplexing and demultiplexing units 60b wavelength-multiplexes main signal light transmitted through the optical transmission line and a downlink control signal output from the second optical multiplexing and demultiplexing unit 70, and outputs the result to the subscriber device 15. As the first optical multiplexing and demultiplexing units 60b, optical multiplexers/demultiplexers having no wavelength selectivity (for example, optical couplers) are used.

The wavelength filter 90 is included between the second optical multiplexing and demultiplexing unit 30 and the management control device 80. The wavelength filter 90 blocks the wavelength of main signal light.

The wavelength filter 91 is included between the second optical multiplexing and demultiplexing unit 70 and the management control device 80. The wavelength filter 91 blocks the wavelength of main signal light.

After the optical path is established, the first optical multiplexing and demultiplexing unit 20b splits a part of an uplink control signal addressed to the management control device 80 from the subscriber device 10 and transfers the part of the uplink control signal to the second optical multiplexing and demultiplexing unit 30. After the optical path is established, the first optical multiplexing and demultiplexing unit 60b wavelength-multiplexes a downlink control signal addressed to the subscriber device 15 from the management control device 80 with main signal light. Since the first optical multiplexing and demultiplexing units 20b are wavelength multiplexers/demultiplexers having no wavelength selectivity, an uplink control signal is also transferred to the wavelength multiplexing and demultiplexing unit 50 side.

However, since the wavelength of the uplink control signal is different from that of main signal light, the uplink control signal is blocked by the wavelength multiplexing and demultiplexing unit 50 and is not transmitted beyond the wavelength multiplexing and demultiplexing unit 50. Therefore, the uplink control signal and the downlink control signal are not mixed. Therefore, similarly to the configuration illustrated in Fig. 1, in a case where there is no section in which signal light in different directions flows through the core wire of the same optical transmission line, the wavelengths of the uplink control signal and the downlink control signal can be set to the same wavelength.

In the optical communication systems 1, 1a, and 1b, a second optical distribution unit may be included instead of the second optical multiplexing and demultiplexing units 30 and 70, and the optical distribution control unit 82-1 may be configured to dynamically set a connection relationship between the ports of the second optical distribution unit such that an uplink control signal that has reached the second optical multiplexing and demultiplexing unit 30 is transmitted to the subscriber device management control unit 83-1. Specifically, for the subscriber device 10-1 before optical path establishing, the presence or absence of the subscriber device 10-1 is not grasped in advance in the management control device 80. Therefore, a route of the optical distribution unit may be periodically set to an unestablished port. Alternatively, in a case where the light detection unit 43 detects an input of light in a new port, a route of the optical distribution unit may be set for each unestablished port, and the subscriber device 10 with which a control signal is exchanged may be searched for.

### (Modification 3)

In the optical communication system 1, the first optical multiplexing and demultiplexing units 20, the second optical multiplexing and demultiplexing unit 30, the optical distribution unit 40-1, the wavelength multiplexing and demultiplexing unit 50-1, and the control unit 81-1 may be configured as an optical communication device. Similarly, the first optical multiplexing and demultiplexing units 60, the second optical multiplexing and demultiplexing unit 70, the optical distribution unit 40-2, the wavelength multiplexing and demultiplexing unit 50-2, and the control unit 81-2 may be configured as an optical communication device.

In the optical communication system 1a, the first optical multiplexing and demultiplexing units 20, the second optical multiplexing and demultiplexing unit 30, the optical distribution unit 40-1, and the control unit 81-1 may be configured as an optical communication device. Similarly, the first optical multiplexing and demultiplexing units 60, the second optical multiplexing and demultiplexing unit 70, the optical distribution unit 40-2, and the control unit 81-2 may be configured as an optical communication device.

In the optical communication system 1b, the first optical multiplexing and demultiplexing units 20b, the second optical multiplexing and demultiplexing unit 30, the optical distribution unit 40-1, the wavelength multiplexing and demultiplexing unit 50-1, the control unit 81-1, and the wavelength filter 90 may be configured as an optical communication device. Similarly, the first optical multiplexing and demultiplexing units 60b, the second optical multiplexing and demultiplexing unit 70, the optical distribution unit 40-2, the wavelength multiplexing and demultiplexing unit 50-2, the control unit 81-2, and the wavelength filter 91 may be configured as an optical communication device.

### (Second Embodiment)

In the first embodiment, the configuration has been described in which a light detection unit is included inside an optical distribution unit. In a second embodiment, a configuration will be described in which a light detection unit is included outside an optical distribution unit.

Fig. 6 is a diagram illustrating a configuration example of an optical communication system 1c according to the second embodiment. The optical communication system 1c includes a plurality of subscriber devices 10 (for example, subscriber devices 10-1 to 10-3), a plurality of subscriber devices 15 (for example, subscriber devices 15-1 to 15-3), a plurality of first optical multiplexing and demultiplexing units 20 (for example, first optical multiplexing and demultiplexing units 20-1 to 20-3), a second optical multiplexing and demultiplexing unit 30, a plurality of optical distribution units 40c (for example, optical distribution units 40c-1 to 40c-2), a plurality of light detection units 43 (for example, light detection units 43-1 to 43-2), a plurality of wavelength multiplexing and demultiplexing units 50 (for example, wavelength multiplexing and demultiplexing units 50-1 to 50-2), a plurality of first optical multiplexing and demultiplexing units 60 (for example, first optical multiplexing and demultiplexing units 60-1 to 60-3), a second optical multiplexing and demultiplexing unit 70, and a management control device 80.

The optical communication system 1c is different from the optical communication system 1 in that optical distribution units 40c-1 and 40c-2 are included instead of the optical distribution units 40-1 and 40-2, and a plurality of light detection units 43 is included outside. Hereinafter, differences from the optical communication system 1 will be described.

The optical distribution unit 40c-1 includes P ports 41-1 and Q ports 42-1. Since the optical distribution unit 40c-2 has a configuration similar to that of the optical distribution unit 40c-1, the configuration of the optical distribution unit 40c-1 will be described as an example. The optical distribution unit 40c-1 is different from the optical distribution unit 40-1 in that the light detection unit 43-1 is not included. The light detection unit 43-1 is connected to a port 42-1-1 of the optical distribution unit 40c-1. Note that the port to which the light detection unit 43-1 is connected may be any port of the ports 42-1. In the following description, assume that the light detection unit 43-1 is connected to the port 42-1-1 of the optical distribution unit 40c-1.

Under the control of the optical distribution control unit 82-1, the optical distribution unit 40c-1 switches a connection relationship between the ports such that each port 41-1 for which the optical path is not established and the port 42-1-1 to which the light detection unit 43-1 is connected are sequentially connected. The light detection unit 43-1 detects an optical signal output from the connected port 42-1-1. In a case of detecting the optical signal, the light detection unit 43-1 notifies the management control device 80 of a detection result indicating that the optical signal is detected.

The configuration and processing of the management control device 80 are basically similar to those of the first embodiment. For example, the management control device 80 is different from that of the first embodiment in processing after step S111 illustrated in Fig. 3 and processing performed by the optical distribution control unit 82-1 after transmission of a search signal.

For example, after a search signal is transmitted, the optical distribution control unit 82-1 controls a connection relationship between the ports of the optical distribution unit 40c-1 such that, among the ports 41-1 of the optical distribution unit 40c-1, each port 41-1 for which the optical path is not established and the port 42-1-1 to which the light detection unit 43-1 is connected are sequentially connected. Note that the optical distribution control unit 82-1 may control the connection relationship between the ports of the optical distribution unit 40c-1 at all times instead of controlling the connection relationship between the ports of the optical distribution unit 40c-1 after a search signal is transmitted.

Upon acquiring a detection result from the light detection unit 43-1, the subscriber device management control unit 83-1 recognizes the port 41-1 connected to the port 42-1-1 to which the light detection unit 43-1 is connected as a port to which the newly connected subscriber device 10 is connected at the time of acquiring the detection result. As this time, in a case where the detection result is acquired before, after, or within a predetermined time before or after the reference time, the subscriber device management control unit 83-1 recognizes that the subscriber device 10-1 newly connected to the optical distribution unit 40c-1 is connected to the port 41-1 connected to the port 42-1-1 to which the light detection unit 43-1 is connected at the time of acquiring the detection result.

For example, in a case where the subscriber device management control unit 83-1 recognizes that the port 41-1-1 is a port to which the newly connected subscriber device 10-1 is connected, the optical distribution control units 82-1 and 82-2 set connection relationships between the ports of the optical distribution units 40c-1 and 40c-2 on the basis of the recognized port 41-1-1 and information of the subscriber device 15 with which the subscriber device 10-1 communicates (for example, subscriber device 15-1). Specifically, the optical distribution control unit 82-1 sets a connection relationship of the optical distribution unit 40c-1 such that the port 41-1-1 connected to the subscriber device 10-1 is connected to a port 42-1-2 connected to the optical distribution unit 40c-2 connected to the subscriber device 15-1. The optical distribution control unit 82-1 generates a control signal for connecting the port 41-1-1 and the port 42-1-2. The optical distribution control unit 82-1 transmits the generated control signal to the optical distribution unit 40c-1.

Similarly, the optical distribution control unit included in the control unit 81-2 sets a connection relationship of the optical distribution unit 40c-2 such that the port connected to the subscriber device 15-1 is connected to the port connected to the optical distribution unit 40c-1 connected to the subscriber device 10-1. The optical distribution control unit included in the control unit 81-2 generates a control signal for connecting the port connected to the subscriber device 15-1 and the port connected to the optical distribution unit 40c-1 connected to the subscriber device 10-1. The optical distribution control unit included in the control unit 81-2 transmits the generated control signal to the optical distribution unit 40c-2.

The optical distribution units 40c-1 and 40c-2 set connection relationships between the ports on the basis of the control signal transmitted from the management control device 80. As a result, an optical path is established between the subscriber device 10-1 and the subscriber device 15-1, as illustrated in Fig. 7. As a result, communication is enabled between the subscriber device 10-1 and the subscriber device 15-1.

According to the optical communication system 1c configured as described above, effects similar to those of the first embodiment can be obtained.

### (Modification 1)

The optical communication system 1c may be modified as in the optical communication system 1a or 1b described in the first embodiment.

### (Modification 2)

The optical communication system 1c may be configured to include header detection units instead of the light detection units 43-1 and 43-2. Each of the header detection units includes a photoelectric conversion unit and a header information acquisition unit. Each of the header detection units is an aspect of a detection unit that detects main signal light. The photoelectric conversion unit converts an optical signal output from the optical distribution units 40c-1 and 40c-2 into an electrical signal. The header information acquisition unit detects and reads the header from an electrical signal. The header information acquisition unit transmits information of the read header to the management control device 80 as a detection result. In a case where a plurality of the subscriber devices 10 simultaneously transmit light having the same wavelength, the light detection unit 43-1 cannot distinguish between two pieces of the light.

For example, in a case where an uplink control signal and a signal conveyed by light having a wavelength that reaches the optical distribution unit 40c-1 are transmitted in an Etherframe, the transmission source MAC addresses of the headers of frames including the respective signals are set to be the same, and accordingly, in a case where the transmission source MAC addresses of the header read from the uplink control signal by the management control device 80 and the header read from the signal conveyed by the light having a wavelength that reaches the optical distribution unit 40c-1 by the header information acquisition unit are the same, the management control device 80 can recognize whether the light having a wavelength that reaches the optical distribution unit 40c-1 output from the subscriber device 10 having the transmission source MAC address is input from any port 41-1 of the optical distribution unit 40c and transferred to the header information acquisition unit. As a result, it is possible to cope with a case where a plurality of the subscriber devices 10 simultaneously transmits the same wavelength.

### (Modification 3)

In the optical communication system 1c, the first optical multiplexing and demultiplexing units 20, the second optical multiplexing and demultiplexing unit 30, the optical distribution unit 40c-1, the light detection unit 43-1, the wavelength multiplexing and demultiplexing unit 50-1, and the control unit 81-1 may be configured as an optical communication device. Similarly, the first optical multiplexing and demultiplexing units 60, the second optical multiplexing and demultiplexing unit 70, the optical distribution unit 40c-2, the light detection unit 43-2, the wavelength multiplexing and demultiplexing unit 50-2, and the control unit 81-2 may be configured as an optical communication device.

Some functional units of the management control device 80 in the above-described embodiments may be implemented by a computer. In that case, a program for implementing this function may be recorded in a computer-readable recording medium, and the program recorded in the recording medium may be read and executed by a computer system to implement this function. Note that the "computer system" herein includes an operating system (OS) and hardware such as peripheral devices.

The "computer-readable recording medium" refers to a portable medium such as a flexible disk, a magneto-optical disk, a read only memory (ROM), or a CD-ROM, or a storage device such as a hard disk included in a computer system, for example. Furthermore, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside the computer system serving as a server or a client in that case. The program described above may be for implementing some of the functions described above, may be implemented in a combination of the functions described above and a program already recorded in a computer system, or may be implemented with a programmable logic device such as a field programmable gate array (FPGA).

Although the embodiments of the present invention have been described in detail with reference to the drawings, specific configurations are not limited to the embodiments and include design and the like within the gist of the present invention.

### Industrial Applicability

The present invention can be applied to a technique for establishing an optical path.

### Reference Signs List

1, 1a, 1b, 1c Optical communication system
10, 15, 10-1 to 10-3, 15-1 to 15-3 Subscriber device
20, 20-1 to 20-3, 60, 60-1 to 60-3 First optical multiplexing and demultiplexing unit
30, 70 Second optical multiplexing and demultiplexing unit
40-1, 40-2, 40c-1, 40c-2 Optical distribution unit
43-1, 43-2, 43c-1, 43c-2 Light detection unit
50-1, 50-2 Wavelength multiplexing and demultiplexing unit
80 Management control device
81-1, 81-2 Control unit
82-1 Optical distribution control unit
83-1 Subscriber device management control unit
85-1 to 85-3, 86-1 to 86-3 Optical transmission line
90, 91 Wavelength filter

## Claims

1. An optical communication device comprising:
a first optical multiplexing and demultiplexing unit configured to split and outputs a control signal and main signal light transmitted at different wavelengths from at least one newly connected subscriber device;
an optical distribution unit configured to include a plurality of first ports and a plurality of second ports, receive as input at least the main signal light split by the first optical multiplexing and demultiplexing unit from any first port of the plurality of first ports, and output the main signal light from any second port of the plurality of second ports;
a detection unit that is included inside or outside the optical distribution unit and detects the main signal light;
a subscriber device management control unit configured to recognize a port of the optical distribution unit to which at least one newly connected subscriber device is connected on a basis of the main signal light detected by the detection unit; and
an optical distribution control unit configured to control connection between ports of the optical distribution unit such that main signal light transmitted from the at least one newly connected subscriber device is transferred to a subscriber device as a communication counterpart.

2. The optical communication device according to claim 1,
wherein in a case where the detection unit is included inside the optical distribution unit,
the detection unit detects the main signal light input to each of the plurality of first ports of the optical distribution unit, and outputs a detection result including information of a first port in which the main signal light has been detected to the subscriber device management control unit.

3. The optical communication device according to claim 1,
wherein in a case where the detection unit is included outside the optical distribution unit, the detection unit is connected to any second port of the plurality of second ports,
the optical distribution control unit performs control such that a first port for which an optical route is not established among the plurality of first ports included in the optical distribution unit and a second port to which the detection unit is connected are sequentially switched and connected, and
the detection unit outputs a detection result to the subscriber device management control unit in a case of detecting the main signal light.

4. The optical communication device according to claim 3,
wherein the subscriber device management control unit recognizes, at a time point at which the detection result output from the detection unit is obtained, that a first port for which an optical route is not established among the plurality of first ports included in the optical distribution unit connected to a second port to which the detection unit is connected is a port to which the at least one newly connected subscriber device is connected.

5. The optical communication device according to claim 3,
wherein the detection unit includes:
a photoelectric conversion unit configured to convert the main signal light into an electric signal; and
a header information acquisition unit configured to detect and reads a header from the electric signal,
the header information acquisition unit outputs information of the read header to the subscriber device management control unit as the detection result, and
the subscriber device management control unit recognizes a port of the optical distribution unit to which the at least one newly connected subscriber device is connected on a basis of information of the header included in the detection result and the control signal.

6. The optical communication device according to any one of claims 1 to 5,
wherein in a case where a detection result detected by the detection unit is acquired before, after, or within a predetermined time before or after a reference time, the subscriber device management control unit recognizes that the at least one newly connected subscriber device is connected to the optical distribution unit.

7. The optical communication device according to any one of claims 1 to 5,
wherein the subscriber device management control unit transmits a search signal for the at least one newly connected subscriber device, and controls a transmission timing of a control signal for one or more subscriber devices that have established an optical path such that a control signal from one or more subscriber devices that have established the optical path does not arrive during a period in which a control signal including a response signal returned in response to the search signal can arrive.

8. An optical communication route establishing method comprising:
splitting and outputting a control signal and main signal light transmitted at different wavelengths from at least one newly connected subscriber device;
by an optical distribution unit that includes a plurality of first ports and a plurality of second ports, receiving as input at least the split main signal light from any first port of the plurality of first ports, and outputting the main signal light from any second port of the plurality of second ports;
detecting the main signal light inside or outside the optical distribution unit;
recognizing a port of the optical distribution unit to which at least one newly connected subscriber device is connected on a basis of the detected main signal light; and
controlling connection between ports of the optical distribution unit such that main signal light transmitted from the at least one newly connected subscriber device is transferred to a subscriber device as a communication counterpart.
